# EUROPÄISCHE PATENTSCHRIFT

(11) **EP 1 385 664 B1**
(45) Veröffentlichungstag und Bekanntmachung des Hinweises auf die Patenterteilung: **26.01.2005**
(21) Anmeldenummer: 02724280.9
(22) Anmeldetag: 09.04.2002
(51) Int. Cl.: B23D 31/00, B22F 5/00, F16C 9/04

(54) **VERFAHREN UND VORRICHTUNG ZUM BEARBEITEN VON RINGARTIGEN WERKSTÜCKEN**
METHOD AND DEVICE FOR MACHINING ANNULAR-SHAPED WORKPIECES
PROCEDE ET DISPOSITIF D'USINAGE DE PIECES ANNULAIRES

(30) Priorität: 08.05.2001 DE 10122249
(43) Veröffentlichungstag der Anmeldung: 04.02.2004
(73) Patentinhaber: Alfing Kessler Sondermaschinen GmbH, 73433 Aalen (DE)
(72) Erfinder: WISNIEWSKI, Horst, 73433 Aalen (DE)
(74) Vertreter: HOFFMANN - EITLE
(86) Internationale Anmeldenummer: PCT/EP2002/003955
(87) Internationale Veröffentlichungsnummer: WO 2002/090028

(56) Entgegenhaltungen:
- EP-A- 0 167 320
- EP-A- 0 696 688
- DE-A- 4 232 432
- DE-A- 4 442 062
- DE-A- 19 959 677
- US-A- 5 551 782

## Beschreibung

### TECHNISCHES GEBIET

Die vorliegende Erfindung betrifft ein Verfahren und eine Vorrichtung zum Bearbeiten von Werkstücken, die mindestens einen ringartigen, mit einer geteilten Bohrung zu versehenden Werkstückabschnitt aufweisen, nach dem Oberbegriff der Ansprüche 1 und 7. Ein derartiges Verfahren und eine derartige Vorrichtung werden in Dokument US 5 551 782 A offenbart. Beispiele für derartige Werkstücke sind Pleuel, ringförmige Gehäuseabschnitte oder dergleichen.

### STAND DER TECHNIK

Es sind Verfahren bekannt, bei denen Werkstücke, die mindestens einen ringartigen, mit einer geteilten Bohrung zu versehenden Werkstückabschnitt aufweisen (zum Beispiel ein Pleuel mit abnehmbaren Lagerdeckel), durch spanende Bearbeitung hergestellt werden. Aufgrund der erforderlichen Passgenauigkeit der geteilten Bohrung und der Werkstückabschnitte an der Trennfuge der Bohrung sind diese konventionellen Verfahren jedoch relativ aufwendig und unwirtschaftlich.

Es sind deshalb als Bruchtrennverfahren und Bruchtrennvorrichtungen bekannte Bearbeitungsverfahren und vorrichtungen entwickelt worden, bei denen das ringartige Werkstück mit mindestens einer Sollbruchstelle versehen und mittels einer Bruchtrenneinrichtung, welche eine Aufspreizkraft an einem Innenumfang der Bohrung aufbringt, aufgetrennt bzw. ein Werkstückabschnitt vollständig abgetrennt wird. Durch die an den Bruchflächen gebildete Mikroverzahnung werden bei dieser Technik passgenaue, miteinander korrespondierende bruchgetrennte Werkstückteile bzw. Werkstückbereiche erzeugt. Die betreffenden Bruchtrenneinrichtungen umfassen üblicherweise eine Aufspreizeinrichtung in der Form von Spreizbacken oder Spreizhülsen, welche in die von dem ringförmigen Bauteil gebildete Bohrung eingreifen. Spreizbackenkonstruktionen sind in der Regel zweiteilig, wobei einer der im Querschnitt im Wesentlichen halbkreisförmigen Spreizbacken zumeist ortsfest und die andere beweglich ist. Über einen Spreizmechanismus, z.B. einen zwischen die Spreizbacken getriebenen Keil oder dergleichen, werden die Spreizbacken in Radialrichtung der Bohrung auseinander gedrückt. Spreizhülsenkonstruktionen wiederum weisen eine im Querschnitt kreisförmige, kronenartig geschlitzte Hülse auf, deren durch die Schlitze gebildete Hülsensegmente durch Eintreiben eines Dornes oder dergleichen biegeelastisch radial nach außen aufspreizbar sind. Sowohl Spreizbacken als auch Spreizhülsen sind üblicherweise aus Metall gefertigt.

Bruchtrennverfahren und Bruchtrennvorrichtungen, die Spreizbacken verwenden, sind beispielsweise in der EP-0-396 797 sowie der EP-0 661 125 offenbart. Bruchtrennverfahren und Bruchtrennvorrichtungen, die Spreizhülsen verwenden, gehen zum Beispiel aus der DE 44 42 062 A1 hervor.

Ferner ist es allgemein bekannt, ringartige ein- oder mehrteilige Werkstücke oder Maschinenbauteile in ihrer Bohrung mit einem einteiligen (d.h. in sich geschlossenen) oder aber auch mehrteiligen (d.h. geteilten) Lager zu versehen, das aus einem für den jeweiligen Anwendungszweck geeigneten Lagerwerkstoff hergestellt ist. Es existieren sowohl Konstruktionen, bei denen der Lagerwerkstoff in Form einer separaten Lagerschale oder Lagerbuchse in die Bohrung eingesetzt und beispielsweise eingelötet oder eingeklebt wird, als auch solche Varianten, bei denen ein Lagerwerkstoff mittels eines Ausgieß-, Schleuder-, Bandaufgieß-, Aufwalz-, Walzplattier-, Aufdampfungs-, Aufspritzverfahren oder auf galvanischem Wege aufgebracht und mit der Bohrungswandung verbunden wird.

Aufgrund der an Lager allgemein gestellten hohen Anforderungen an die Formhaltigkeit und Passgenauigkeit ist besonders die Herstellung von geteilten Lagerkonstruktionen sehr aufwendig. Auch erfordern diese Lager nicht unerhebliche Nachbearbeitungsschritte. Insgesamt sind geteilte Lagerkonstruktionen daher recht kostenintensiv.

### DARSTELLUNG DER ERFINDUNG

Der Erfindung liegt die Aufgabe beziehungsweise das technische Problem zugrunde, ein neuartiges Bearbeitungsverfahren sowie eine neuartige Bearbeitungsvorrichtung zu schaffen, das bzw. die es ermöglicht, Werkstücke, die mindestens einen ringartigen Werkstückabschnitt aufweisen, der mit einer geteilten Bohrung und einem Lager zu versehen ist, auf vergleichsweise einfache und effektive Art und Weise zu fertigen und gleichzeitig ein qualitativ hochwertiges Endprodukt zu erzielen.

Die zuvor genannte Aufgabe wird gelöst durch ein erfindungsgemäßes Verfahren mit den Merkmalen des Anspruchs 1.

Dieses Verfahren zum Bearbeiten von Werkstücken, die mindestens einen ringartigen, mit einer geteilten Bohrung zu versehenden Werkstückabschnitt aufweisen, umfasst folgende Schritte, jedoch nicht zwingenderweise in der gegebenen Reihenfolge:
a) Bereitstellen eines mit mindestens einer Sollbruchstelle versehenen Werkstückes;
b) Aufbringen einer Aufspreizkraft an einem Innenumfang der Bohrung zum Bruchtrennen des mindestens einen ringartigen Werkstückabschnitts und zum Erzeugen miteinander korrespondierender bruchgetrennter Werkstückteile (oder - bereiche) mit einer geteilten Bohrung;
c) Zusammenpassen und lösbares Verbinden der durch den Schritt b) entstandenen bruchgetrennten Werkstückteile;
d) Aufbringen von mindestens einer in sich geschlossenen ringförmigen Gleitlagermaterialschicht auf den Innenumfang der geteilten Bohrung des bruchgetrennten Werkstücks;
e) Lösen der Verbindung zwischen den zusammengepassten Werkstückteilen; und
f) Aufbringen einer Aufspreizkraft an dem gesamten Innenumfang der in sich geschlossenen ringförmigen Gleitlagermaterialschicht, zum Bruchtrennen der Gleitlagermaterialschicht.

Die in Schritt a) genannte Sollbruchstelle wird vorzugsweise in Form von einer oder mehreren Bruchtrennkerben ausgeführt, die eine vorgegebene Bruchtrennebene definieren. Diese Bruchtrennkerben können durch Stoßen, Räumen, Laserbearbeitung oder eine andere geeignete Methode erzeugt werden.

Unter einer geteilten Bohrung ist im Sinne der Erfindung nicht nur eine Bohrung zu verstehen, die an zwei oder mehreren Stellen ihres Innenumfangs aufgetrennt bzw. aufgebrochen ist, also durch zwei oder mehrere separate Werkstückteile gebildet werden kann, sondern auch eine solche, bei welcher der Bohrungsinnenumfang lediglich an einer Stelle aufgebrochen ist.

Das in Schritt c) durchzuführende lösbare Verbinden der durch den Schritt b) entstandenen bruchgetrennten Werkstückteile kann sowohl mittels am Werkstück selbst anbringbarer Verbindungsmittel, wie z.B. in das Werkstück eingreifende Schrauben, als auch durch externe Einrichtungen, wie z.B. Spann- oder Klemmeinrichtungen erfolgen. Sofern das Verbinden mittels der am Werkstück selbst anbringbaren Verbindungsmittel ausgeführt wird, so ist das Werkstück zweckmäßigerweise bereits zuvor mit entsprechenden Aufnahmen oder Fixierungsmöglichkeiten für diese Verbindungsmittel auszustatten. Die Art und Weise des Lösens der Verbindung in Schritt e) richtet sich nach der zuvor gewählten Verbindungsart. Für das Aufbringen der Gleitlagermaterialschicht in Schritt d) wird ein auf den jeweiligen Anwendungsfall abgestimmter und geeigneter Lagerwerkstoff, wie zum Beispiel ein Lagermetall oder ein Mehrstoff-Lagerwerkstoff verwendet. Durch das Aufbringen der Gleitlagermaterialschicht werden die zuvor bruchgetrennten, d.h. entweder aufgetrennten oder vollständig abgetrennten Werkstückabschnitte am inneren Randbereich der entstandenen und durch den Bohrungsinnenumfang hindurch tretenden Bruchtrennebene wieder miteinander verbunden.

Im Schritt f) wird diese von der Gleitlagermaterialschicht gebildete Verbindung wieder getrennt, und zwar erneut mittels eines separaten Bruchtrennvorgangs, der speziell auf die Gleitlagermaterialschicht abgestimmt ist. Da die im Schritt b) bruchgetrennten Werkstückabschnitte außer über die Gleitlagermaterialschicht hinweg keinen direkten Zusammenhalt mehr besitzen und die Gleitlagermaterialschicht zudem relativ dünn ist, sind für das Brechen der Gleitlagermaterialschicht nur relativ geringe Kräfte erforderlich. Weil die Gleitlagermaterialschicht jedoch gänzlich unterschiedliche Werkstoffeigenschaften und damit ein anderes Bruchtrennverhalten als das restliche Werkstück besitzt, wird das Bruchtrennen der Gleitlagermaterialschicht vorzugsweise mit anderen Mitteln und mit anderen Bruchtrennparametern als beim Bruchtrennen des Ausgangswerkstückes ausgeführt.

Die Erfinder des vorliegenden Anmeldungsgegenstandes haben erkannt, dass bei Werkstücken, die mindestens einen ringartigen Werkstückabschnitt aufweisen, der mit einer geteilten Bohrung mit einem geteilten Lager zu versehen ist, das Lagermaterial direkt auf einen bereits zuvor bruchgetrennten Werkstückbereich aufgebracht und die so erzeugte Lagermaterialschicht, welche die zuvor bruchgetrennten Werkstückteile wieder verbindet, dann ohne eine spanabhebende Bearbeitung durch einen erneuten Bruchtrennschritt auf- bzw. abgetrennt werden kann. Für das Bruchtrennen des Ausgangswerkstückes und das Bruchtrennen der Lagermaterialschicht sind also zwei voneinander gänzlich unabhängige Bruchtrennschritte erforderlich. Eine von den Erfindern zum Vergleich getestete Methode, bei der erst das Lagermaterial auf ein nicht bruchgetrenntes Ausgangswerkstück aufgebracht und dann das Werkstück samt Lagermaterialschicht in einem Arbeitsgang bruchgetrennt wird, lieferte dagegen keine zufriedenstellenden Resultate.

Die erfindungsgemäßen Lösung indes erzielt mit relativ wenigen Verfahrensschritten ein qualitativ hochwertiges Endprodukt, bei welchem über die gesamte durch das Werkstück und die Gleitlagerschicht hindurch verlaufende Bruchtrennebene hinweg eine sehr passgenaue Mikroverzahnung und insbesondere an dem in die Bohrung mündenden Randbereichen der Bruchtrennebene ein regelmäßiger passgenauer Stoß, der als solcher keiner weiteren Nachbearbeitung bedarf, ausgebildet wird. Das erfindungsgemäße Verfahren ist grundsätzlich sowohl bei Werkstücken, die mit nur einem einzigen ringartigen Werkstückabschnitt ausgestattet sind, als auch bei Werkstücken, die mehrere solcher Abschnitte axial hinter- oder nebeneinander aufweisen, anwendbar. Das erfindungsgemäße Verfahren ermöglicht es somit auf vergleichsweise einfache, effektive und sehr wirtschaftliche Art und Weise, Werkstücke mit einem bruchgetrennten ringartigen Werkstückabschnitt und einem in diesem Werkstückabschnitt angebrachten, geteilten, bruchgetrennten Lager mit einer hohen Lagergüte und Passgenauigkeit zu fertigen. Aufwendige Nachbearbeitungsschritte, die über das übliche Feinbearbeiten von Lagern hinausgehen, sind nicht erforderlich. Dies eröffnet gegenüber konventionellen verfahren eine beträchtliche Einsparung von Bearbeitungsschritten und folglich erheblich Rationalisierungsmöglichkeiten.

Gemäß des erfindungsgemäßen Verfahrens wird die Gleitlagermaterialschicht im Schritt f) an ihrem Innenumfang (d.h. von der Innenseite der Bohrungsöffnung her radial nach außen wirkend) elastisch, vorzugsweise gummielastisch, und

vollflächig (d.h. bei einer kreisrunden Bohrung über geschlossene 360°) abgestützt. Der Schritte f) hat damit eine Mehrfachfunktion. Es wird nicht nur die zum Bruchtrennen der Gleitlagermaterialschicht erforderliche Aufspreizkraft am Innenumfang der Schicht aufgebracht, sondern gleichzeitig auch über im Wesentlichen die gesamte Aufspreizdauer bis zum Bruch bzw. vollständigen Bruch (also während des Brechvorgangs) die ringförmige Gleitlagermaterialschicht an einer Seite radial unterstützt und an der anderen Seite an das Werkstückmaterial der Grundbohrung, auf die sie aufgetragen wurde, angepresst. Auf diese Weise lässt sich ein unerwünschtes Ablösen des verarbeitungstechnisch kritischen Gleitlagermaterials wirkungsvoll vermeiden. Es wird an dieser Stelle darauf hingewiesen, dass dieser positive Effekt mit konventionellen halbkreisförmigen Spreizbacken, die gerade im Bereich der Bruchtrennebene des Werkstücks einen beträchtlichen Zwischenraum aufweisen, oder mit Spreizhülsen, die benachbarte segmentartige Spreizelemente mit jeweiligen Zwischenräumen besitzen, nicht realisierbar ist.

Weitere bevorzugte und vorteilhafte Ausführungsmerkmale des erfindungsgemäßen Verfahrens sind Gegenstand der Unteransprüche 2 bis 6.

Die der vorliegenden Erfindung zugrunde liegende Aufgabe wird des Weiteren gelöst durch eine erfindungsgemäße Vorrichtung mit den Merkmalen des Anspruchs 7.

Diese Vorrichtung zum Bearbeiten von Werkstücken, die mindestens einen ringartigen, mit einer geteilten Bohrung zu versehenden Werkstückabschnitt aufweisen, umfasst: eine Bruchtrenneinrichtung zum Bruchtrennen des ringartigen Werkstückabschnitts und zum Erzeugen miteinander korrespondierender bruchgetrennter Werkstückteile mit einer geteilten Bohrung; eine Gleitlagermaterial-Auftragseinrichtung zum Aufbringen von mindestens einer in sich geschlossenen ringförmigen Gleitlagermaterialschicht auf den Innenumfang der

geteilten Bohrung eines bruchgetrennten Werkstücks; und eine Gleitlagermaterialschicht-Bruchtrenneinrichtung zum Bruchtrennen der in sich geschlossenen ringförmigen Gleitlagermaterialschicht des bruchgetrennten Werkstücks.

Die Bruchtrenneinrichtung für das ursprüngliche Ausgangswerkstück und die Gleitlagermaterialschicht-Bruchtrenneinrichtung sind voneinander verschieden. Sie können räumlich voneinander getrennt oder aber auch in unmittelbarerer Nähe zueinander angeordnet, d.h. zu einer Einheit zusammengefasst sein. Auch bei einer räumlichen Trennung der beiden Einrichtungen ist es nicht zwingend erforderlich, das Werkstück von einer Einrichtung zu der anderen zu transportieren. Im Sinne der Erfindung ist es beispielsweise denkbar, dass das Werkstück zur Bearbeitung mittels der unterschiedlichen Bruchtrenneinrichtungen in der selben Einspanneinrichtung gehalten verbleibt.

Die erfindungsgemäße Vorrichtung bietet im Wesentlichen die gleichen Vorteile wie das bereits zuvor geschilderte erfindungsgemäße Verfahren. Darüber hinaus gestattet es die erfindungsgemäße Vorrichtung, auf aufwendige Nachbearbeitungseinrichtungen, wie sie für konventionelle geteilte Lager bisher erforderlich sind, verzichten zu können.

Weitere bevorzugte und vorteilhafte Ausgestaltungsmerkmale der erfindungsgemäßen Vorrichtung sind Gegenstand der Unteransprüche 8 bis 13.

Ein bevorzugtes Ausführungsbeispiel der Erfindung mit zusätzlichen Ausgestaltungsdetails und weiteren Vorteilen ist nachfolgend unter Bezugnahme auf die beigefügten Zeichnungen näher beschrieben und erläutert.

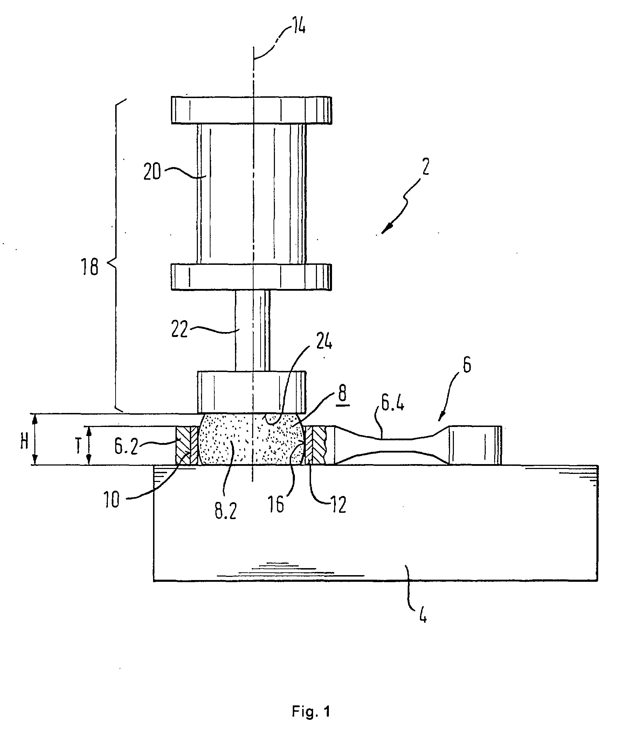

### KURZE BESCHREIBUNG DER ZEICHNUNG

Die Figur zeigt eine schematische, stark vereinfachte und teilweise geschnittene Seitenansicht einer Gleitlagermaterialschicht-Bruchtrenneinrichtung der erfindungsgemäßen Vorrichtung, die zur Ausführung des erfindungsgemäßen Verfahrens geeignet ist.

### DARSTELLUNG EINES BEVORZUGTEN AUSFÜHRUNGSBEISPIELS

Für die vorliegende Beschreibung wird angenommen, dass es sich bei dem Werkstück, das mittels des erfindungsgemäßen Verfahrens bearbeitet werden soll, um einen vorgefertigten Pleuelstangenrohling handelt, der einen noch ungeteilten Pleuelfuß mit einer noch ungeteilten Lagerbohrung besitzt. Um die Pleuelstange später an einem Kurbelzapfen einer Kurbelwelle befestigen und betreiben zu können, muss der Pleuelstangenrohling im Bereich des ringförmigen Pleuelfußabschnitts, welcher die Lagerbohrung enthält, in zwei Teile, nämlich Pleuelkörper und Pleueldeckel, getrennt und ein Gleitlagermaterial in der Bohrung angebracht werden. Die noch nicht mit dem Gleitlagermaterial versehene Bohrung wird nachfolgend auch als Grundbohrung bezeichnet werden.

Zu dem vorher genannten Zweck werden nun folgende Schritte, jedoch nicht zwingenderweise in der gegebenen Reihenfolge ausgeführt.

Zunächst erfolgt eine Vorbearbeitung des bereits die noch ungeteilte Pleuelbohrung enthaltenden Pleuelstangenrohlings, wobei die Schraubenbohrungen für den späteren Pleueldeckel im Pleuel hergestellt werden. Dieser Arbeitsgang umfasst im vorliegenden Beispiel sowohl das Einarbeiten der Sacklöcher als auch das Einarbeiten der Innengewinde für die Deckelverschraubung. Dann werden z.B. mit Hilfe eines Lasers am Innenumfang der Grundbohrung zwei diametrale Kerben angebracht, welche jeweils eine Sollbruchstelle bilden.

Der so bereitgestellte Rohling wir dann in einer Bruchtrenneinrichtung weiterverarbeitet, in der durch Aufbringen einer Aufspreizkraft am Innenumfang der Grundbohrung der Pleueldeckel entlang einer durch die Sollbruchstellen und folglich durch die Grundbohrung hindurch verlaufenden Bruchebene abgetrennt wird. Als Bruchtrenneinrichtung kann hierbei zum Beispiel eine konventionelle, mit Spreizbacken, Spreizhülsen oder einem Brechdorn ausgestattete Einrichtung Anwendung finden.

Die bruchgetrennten Werkstückteile, d.h. der Pleueldeckel und der verbleibende Pleuelkörper, werden anschließend wieder zusammengepasst und durch Verschrauben lösbar aber fest miteinander verbunden.

Anschließend wird mit Hilfe einer an sich bekannten Gleitlagermaterial-Auftragseinrichtung ein Gleitlagermaterial auf den Innenumfang der geteilten Grundbohrung des bereits zuvor bruchgetrennten Pleuelstangenrohlings aufgebracht. Das Gleitlagermaterial (hier: ein Lagermetall) wird beispielsweise mittels eines Spritzverfahrens aufgetragen und bildet eine relativ dünne, in sich geschlossenen ringförmigen Gleitlagermaterialschicht auf dem Innenumfang der geteilten Grundbohrung. Obwohl in diesem Ausführungsbeispiel nur eine einzelne Schicht aufgebracht wird, umfasst die Erfindung auch solche Varianten, bei denen in diesem Schritt mehrere Gleitlagermaterialschichten aufgebracht werden.

Nach Fertigstellen der Gleitlagermaterialschicht, die eine relativ feste aber für mechanische Beanspruchungen, die von beabsichtigten Lagerbeanspruchungen abweichen, nicht unkritische Verbindung mit der Oberfläche der Grundbohrung hat, wird die Gleitlagermaterialschicht feinbearbeitet. Die Feinbearbeitung ist erforderlich, da das Gleitlagermaterial in der Regel nicht völlig gleichmäßig aufgebracht werden kann, sondern meist ein wenig wellig und ungleichmäßig ist und folglich noch auf die genauen Lagermaße gebracht werden muss.

Je nach verwendetem Lagermaterial sind allerdings auch Fälle denkbar, in denen die Feinbearbeitung entfallen kann.

Durch Losdrehen der Verschraubung wird nun die Verbindung zwischen dem Pleueldeckel und dem Pleuelkörper wieder gelöst. Die Verschraubung kann hierbei entweder gänzlich entfernt oder aber nur teilweise herausgedreht werden. Infolge der Lagermaterialaufbringung sind Pleueldeckel und Pleuelkörper, die durch den vorangegangenen Bruchtrennvorgang ja vollständig voneinander getrennt wurden, am inneren Randbereich der durch den Innenumfang der zuvor geteilten Grundbohrung hindurch tretenden Bruchtrennebene mittels der Gleitlagermaterialschicht wieder miteinander verbunden.

Der in diesem Zustand befindliche Pleuelstangenrohling wird nun einem zweiten Bruchtrennvorgang unterzogen, bei dem mittels einer nachfolgend noch näher beschriebenen Gleitlagermaterialschicht-Bruchtrenneinrichtung eine Aufspreizkraft an dem gesamten Innenumfang der durch das Aufspritzen des Lagermaterials gebildeten, in sich geschlossenen ringförmigen Gleitlagermaterialschicht aufgebracht wird. Gleichzeitig wird die Gleitlagermaterialschicht von der Innenseite der Bohrungsöffnung her (also vom Innenumfang der Schicht her radial nach außen wirkend) elastisch und vollflächig abgestützt. Durch die gewissermaßen kombinierte Aufspreiz- und Abstützwirkung wird zudem die an die Grundbohrung angrenzende Seite der Gleitlagermaterialschicht an das Werkstückmaterial der Grundbohrung, auf die es aufgetragen wurde, angepresst.

Auf diese Weise wird die Gleitlagermaterialschicht mittels der Gleitlagermaterialschicht-Bruchtrenneinrichtung in zwei ringförmige Hälften bruchgetrennt und damit wiederum der Pleueldeckel vollständig vom Pleuelkörper abgetrennt. Die durch die Gleitlagermaterialschicht verlaufende Bruchtrennebene bildet hierbei eine im Wesentlichen direkte Fortsetzung der im ersten Bruchtrennschritt erzeugten, bereits vorhandenen Bruchtrennebene. Eine vorherige Anbringung von Sollbruchstellen an der Gleitlagermaterialschicht ist hierfür grundsätzlich nicht erforderlich. Die oben genannte Abstütz- und Andrückwirkung bleibt im Wesentlichen bis zum vollständigen Bruch aufrecht erhalten. Die genauen Mittel, mit denen eine solche Wirkung erzielbar ist, werden nachfolgend im Zusammenhang mit der erfindungsgemäßen Vorrichtung noch näher erläutert werden.

Falls nicht bereits zuvor die oben beschriebene Feinbearbeitung der Gleitlagermaterialschicht ausgeführt worden wäre, so könnte sie auch zum jetzigen Zeitpunkt erfolgen, und zwar, nachdem Pleueldeckel und Pleuelkörper wieder in der bereits dargelegten Art und Weise zusammengepasst und durch Verschrauben lösbar miteinander verbunden wurden.

Das erfindungsgemäße Verfahren als solches ist damit abgeschlossen, und es können sich weitere erforderliche Bearbeitungsschritte anschließen.

Es wird nun die erfindungsgemäße Vorrichtung beschrieben.

Der grundlegende Aufbau und die Funktion der Bruchtrenneinrichtung zum Bruchtrennen des Ausgangswerkstückes, d.h. des noch einteiligen Pleuelstangenrohlings, und der Gleitlagermaterial-Auftragseinrichtung wurden bereits in Verbindung mit dem erfindungsgemäßen Verfahren erläutert, so dass sich weitere Darlegungen zu diesen Vorrichtungskomponenten an dieser Stelle erübrigen.

Die beiliegende Figur zeigt eine schematische, stark vereinfachte Seitenansicht einer möglichen Ausführungsform der Gleitlagermaterialschicht-Bruchtrenneinrichtung 2 der erfindungsgemäßen Vorrichtung, mit der das Bruchtrennen der in sich geschlossenen ringförmigen Gleitlagermaterialschicht auf die oben eingehend beschriebene Art und Weise durchführbar ist.

Wie in der Zeichnung erkennbar, umfasst die Gleitlagermaterialschicht-Bruchtrenneinrichtung 2 eine Auflage oder Basis 4, auf welcher der zu bearbeitende Pleuelstangenrohling 6 flach aufgelegt, bzw. gehalten oder festgespannt ist. Die entsprechenden Halte- bzw. Spanneinrichtungen sowie die Verschraubung von Pleueldeckel 6.2 und Pleuelkörper 6.4 sind der besseren Übersichtlichkeit halber in der Zeichnung nicht dargestellt. Ferner ist die Gleitlagermaterialschicht-Bruchtrenneinrichtung 2 mit einem elastischen Aufspreiz- und Abstützelement 8 (nachfolgend kurz Element 8 genannt) ausgerüstet, welches axial in die durch die geteilte und beschichtete Grundbohrung 10 gebildete Pleuelbohrungsöffnung und damit in den vom Innenumfang 16 der ringförmigen Gleitlagermaterialschicht 12 begrenzten Raum einführbar und vollflächig an den Innenumfang 16 der Gleitlagermaterialschicht 12 anlegbar ist. Die Unterseite des Elementes 8 stützt sich im vorliegenden Beispiel ebenfalls auf der Auflage 4 ab. Das Element 8 ist hierbei entweder lose in die Pleuelbohrungsöffnung eingelegt oder aber an der Auflage 4 fixiert. Im letztgenannten Fall wird die Pleuelstange 6 dann mit ihrer Bohrungsöffnung über das ortfest angeordnete Element 8 gelegt. Grundsätzlich kann das Element 8 aber auch über eine separate Positionierungseinrichtung innerhalb des von der Gleitlagermaterialschicht 12 gebildeten Rings angeordnet und/oder an dem Stempel 22 befestigt werden.

Das Element 8 besitzt einen im Wesentlichen aus einem Elastomerwerkstoff hergestellten, elastisch komprimierbaren Körper 8.2 mit einer bezogen auf die Bohrungsachse 14 rotationssymmetrischen zylindrischen oder faßförmigen Gestalt. Die in Axialrichtung der Grundbohrung 10 bzw. Bohrungsöffnung gemessene Höhe H des elastischen Elementes 8 ist größer als die axiale Tiefe T der Grundbohrung 10 bzw. des Gleitlagermaterialschicht-Rings. In der Figur, welche das Element 8 in einem nicht aufgespreizten Zustand darstellt, kann man erkennen, dass das Element 8 die Pleuelbohrung bzw. den durch den Innenumfang 16 der ringförmigen Gleitlagermaterialschicht 12 umgrenzten Raum bereits im Wesentlichen vollständig ausfüllt. Im aufgespreizten Zustand füllt das Element 8 den besagten Raum dagegen gänzlich aus.

Im vorliegenden Beispiel ist der elastisch komprimierbare Körper 8.2 als Vollkörper ausgebildet. Er kann jedoch ebenso als Hohlkörper geformt sein. Unabhängig davon, ob der Körper 8.2 als Voll- oder Hohlkörper ausgestaltet ist, kann er einen ein- oder mehrteiligen bzw. ein- oder mehrschichtigen Aufbau mit unterschiedlichen Elastizitäten und/oder Härten haben und auch einen Kern, Ansatzstücke, Zentriermittel, Befestigungsmittel, Ausrichthilfen oder dergleichen aus gleichen oder unterschiedlichen Werkstoffen aufweisen. Auf diese Weise wird eine für den jeweiligen Einsatzzweck geeignete Elastizität, ein für das vollflächige Anlegen des Elementes 8 bzw. dessen Körper 8.2 an den gesamten Innenumfang 16 der in sich geschlossenen ringförmigen Gleitlagermaterialschicht 12 erforderliches Verformungsverhalten sowie ein bestimmtes Anpress- und Aufspreizverhalten erzielt.

Der Figur ist ferner entnehmbar, dass die Gleitlagermaterialschicht-Bruchtrenneinrichtung 2 eine in Richtung der Achse 14 der Grundbohrung 10 auf das elastische Element 8 bzw. dessen elastisch komprimierbaren Körper 8.2 einwirkende Druckbeaufschlagungseinrichtung 18 besitzt. Diese Druckbeaufschlagungseinrichtung 18 umfasst im vorliegenden Ausführungsbeispiel einen Hydraulikzylinder 20 mit einem einund ausfahrbaren Stempel 22, der über seine Unterseite 24 an die Oberseite des elastischen Elementes 8, d.h. an dessen aus der Pleuelöffnung heraus ragenden oberen Bereich, anlegbar ist. Anstelle einer hydraulischen Druckbeaufschlagungseinrichtung sind im Sinne der Erfindung jedoch auch mechanische, pneumatische, elektrische, elektromagnetische, elektrohydraulische Druckbeaufschlagungseinrichtung sowie Mischformen daraus möglich.

Zum Bruchtrennen der Gleitlagermaterialschicht 12 des vorbereiteten Pleuelstangenrohlings 6 (siehe obige Ausführungen zum erfindungsgemäßen Verfahren) wird der Stempel 22 abgesenkt und mit seiner Unterseite 24 auf das elastische Element 8 gepresst (In einer Ausführungsform, bei der das Element an dem Stempel 22 befestigt ist, wird das Element 8 vorzugsweise auf die Auflage bzw. den Grundkörper 4 gepresst). Das elastische Element 8 bzw. dessen Körper 8.2 wird dadurch zusammengedrückt und verformt sich sowohl in axialer als auch radialer Richtung innerhalb des von der Gleitlagermaterialschicht 12 gebildeten Rings bzw. innerhalb der Pleuelbohrungsöffnung. Hierbei legt sich das elastische Element 8 vollflächig an den Innenumfang 16 der in sich geschlossenen ringförmigen Gleitlagermaterialschicht 12 an.

Auf diese Weise übt das elastische Element 8 bzw. dessen Körper 8.2 eine radiale Aufspreizkraft auf die Gleitlagermaterialschicht 12 aus, während es die Gleitlagermaterialschicht 12 gleichzeitig von der Innenseite der Bohrungsöffnung her (also vom Innenumfang 16 der Schicht 12 her radial nach außen) elastisch und vollflächig abstützt und zudem die an die Grundbohrung 10 angrenzende Seite der Gleitlagermaterialschicht 12 an das Werkstückmaterial der Grundbohrung 10, auf welche die Schicht 12 aufgetragen wurde, angepresst. Bei Erreichen einer vorbestimmten Aufspreizkraft, die sich insbesondere aus den Werkstoffparametern und der Dicke der Gleitlagermaterialschicht 12 sowie den Einspannbedingungen des Werkstückes 6 ergibt, wird die Gleitlagermaterialschicht 12 in zwei ringförmige Hälften bruchgetrennt und damit wiederum der Pleueldeckel 6.2 vollständig vom Pleuelkörper 6.4 abgelöst. Nach erfolgtem Bruch wird der Stempel 22 zurückgezogen und das Element 8 freigegeben. Hierbei verformt sich das Element 8 elastisch in seine Ausgangsform zurück.

Obwohl im zuvor beschriebenen Ausführungsbeispiel die Druckbeaufschlagung des elastischen Elementes 8 nur von einer Seite her erfolgte, wobei die Reactio an der Auflage 4 die entsprechende Gegenkraft liefert, umfasst das vorliegende Beispiel auch solche Varianten bei denen das elastische Element 8 von beiden Seiten der Bohrung her zusammengedrückt wird. Hierzu ist dann ein zweiter Hydraulikzylinder 20 mit einem zweiten Stempel 22 vorzusehen und die Auflage 4 entsprechend auszusparen. In einem solchen Falle ist zudem die in Axialrichtung der Bohrung 10 gemessene Höhe bzw. Dicke des elastischen Elementes 8 zweckmäßigerweise so zu wählen, dass das Element 8 im unbelasteten Zustand aus beiden Seiten der Bohrungsöffnung herausragt. Anstelle die zu bearbeitende Pleuelstange 6 flach auf der Auflage 4 anzuordnen, wäre es dann ebenfalls möglich, die Pleuelstange 6 hochkant zu halten und die Stempel 22 in horizontaler Richtung zu verfahren.

Obwohl es bei dem erfindungsgemäßen Verfahren, wie oben schon erwähnt, für das Bruchtrennen der Gleitlagermaterialschicht grundsätzlich nicht erforderlich ist, eine Sollbruchstelle an der Gleitlagermaterialschicht vorzusehen, so umfasst das vorliegende Beispiel diese Möglichkeit dennoch optional für besonders dicke Gleitlagermaterialschichten und/oder besonders zähe Lagermaterialien bzw. -werkstoffe. Die Anbringung derartiger Sollbruchstellen erfolgt dann zweckmäßigerweise nach der Herstellung der Gleitlagermaterialschicht, aber noch vor dem Bruchtrennen der Schicht. Es ist möglich, die Gleitlagermaterialschicht spanabhabend aufzutrennen. Gemäß dem Beispiel kann die Gleitlagermaterialschicht auch zumindest teilweise spanabhebend aufgetrennt und der verblebende Teil wiederum bruchgetrennt werden.

Insbesondere ist auch vorgesehen, dass die Vorrichtung mit geeigneten Bedienelementen sowie Kontrollund/oder Steuer- und/oder Regeleinrichtungen ausgestattet ist. Im Rahmen des vorliegenden Beispiels kann die Gleitlagermaterialschicht-Bruchtrenneinrichtung des Weiteren geeignete Halteelemente, Spanneinrichtungen und/oder Führungen für das zu bearbeitende Werkstück aufweisen.

Obwohl im obigen Ausführungsbeispiel das elastische Aufspreizund Abstützelement als elastisch komprimierbarer Körper ausgebildet ist, umfasst das Ausführungsbeispiel auch solche Konstruktionen, bei denen das elastische Aufspreiz- und Abstützelement einen elastisch expandierbaren Hohlkörper besitzt, welcher den von dem Innenumfang der Gleitlagermaterialschicht umgrenzten Raum vollständig ausfüllt. Es ist bevorzugt, dass auch ein derartiger Hohlköper einen oder mehrere Elastomerwerkstoffe umfasst. Der Hohlkörper hat eine auf die Bohrungsgeometrie und -abmessung entsprechend abgestimmte Gestalt. Im Wesentlichen kugel-, zylinder- oder fassförmige Hohlkörper haben sich als besonders geeignet erwiesen. Es ist zu beachten, dass der Hohlkörper im nicht expandierten Zustand eine wesentlich kleinere Abmessung als die korrespondierende Werkstückbohrung aufweisen kann. Zweckmäßigerweise ist der Innenraum des Hohlkörpers mit einer Innendruckbeaufschlagungseinrichtung verbunden. Zur Erzeugung eines Innendrucks zum Aufweiten des Hohlkörpers sind besonders gasförmige oder flüssige Medien geeignet. Die Wirkungsweise des elastisch expandierbaren Hohlkörpers entspricht im Wesentlichen derjenigen des elastisch komprimierbaren Körpers.

Sowohl der elastisch komprimierbare Körper als auch der elastisch expandierbare Hohlkörper der Gleitlagermaterialschicht-Bruchtrenneinrichtung müssen nicht zwingenderweise eine bezogen auf die Bohrungsachse des Werkstückes symmetrische oder kreisrunde Querschnittsform aufweisen. Besonders im Bereich der zu erzielenden Bruchtrennebene der ringförmigen Gleitlagermaterialschicht kann der betreffende Körper im komprimierten bzw. expandierten Zustand auch eine asymmetrische oder unregelmäßige Querschnittsform und/oder innerhalb eines Querschnitts unterschiedliche radiale Abmessungen besitzen. Beispielsweise kann der elastisch komprimierbare Körper über eine ovale Querschnittsform verfügen, wobei sich die längere Querschnittsachse im wesentlichen entlang der späteren Bruchtrennebene der Gleitlagermaterialschicht erstreckt. Auf diese Weise sind dann bestimmte Verformungs-, Aufspreiz-, Abstütz- und Gleitlagermaterialschicht-Anpresseigenschaften der betreffenden elastischen deformierbaren Körper zu erzielen.

Anstelle der oben beschriebenen Aufspritzeinrichtung für das Lagermaterial kann die Gleitlagermaterial-Auftragseinrichtung auch eine Gleitlagermaterial-Gieß-, -Aufschleuder-, -Bandaufgieß-, -Aufwalz-, -Walzplattier-, -Aufdampf- , -Aufgalvanisiereinrichtung, oder dergleichen umfassen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Gleitlagermaterialschicht-Bruchtrenneinrichtung
- 4: Auflage / Basis
- 6: Pleuelstangenrohling / Werkstück
- 6.2: Pleueldeckel
- 6.4: Pleuelkörper
- 8: Elastisch deformierbares Aufspreiz- und Abstützelement
- 8.2: Elastisch komprimierbarer Körper von 8
- 10: Grundbohrung / Pleuelbohrung
- 12: Ringförmige Gleitlagermaterialschicht
- 14: Bohrungsachse
- 16: Innenumfang von 12
- 18: Druckbeaufschlagungseinrichtung
- 20: Hydraulikzylinder von 18
- 22: Stempel von 18
- 24: Unterseite von 22

- H: Höhe von 8
- T: Axiale Tiefe der Bohrung 10

## Patentansprüche

1. Verfahren zum Bearbeiten von Werkstücken (6), die mindestens einen ringartigen, mit einer geteilten Bohrung (10) zu versehenden Werkstückabschnitt aufweisen, umfassend folgende Schritte:
a) Bereitstellen eines mit mindestens einer Sollbruchstelle versehenen Werkstückes (6),
b) Aufbringen einer Aufspreizkraft an einem Innenumfang der Bohrung (10) zum Bruchtrennen des mindestens einen ringartigen Werkstückabschnitts und zum Erzeugen miteinander korrespondierender bruchgetrennter Werkstückteile (6.2, 6.4) mit einer geteilten Bohrung (10),
c) Zusammenpassen und lösbares Verbinden der durch den Schritt b) entstandenen bruchgetrennten Werkstückteile (6.2, 6.4),
d) Aufbringen von mindestens einer in sich geschlossenen ringförmigen Gleitlagermaterialschicht (12) auf den Innenumfang der geteilten Bohrung (10) des bruchgetrennten Werkstücks (6.2, 6.4),
e) Lösen der Verbindung zwischen den zusammengepassten Werkstückteilen (6.2, 6.4),
f) Aufbringen (2, 8, 18, 20, 22, 24) einer Aufspreizkraft an dem gesamten Innenumfang (16) der in sich geschlossenen ringförmigen Gleitlagermaterialschicht (12) zum Bruchtrennen der Gleitlagermaterialschicht (12), **dadurch gekennzeichnet, daß** die ringförmige Gleitlagermaterialschicht (12) an ihrem Innenumfang (16) elastisch und vollflächig abgestützt (8) wird.

2. Verfahren nach Anspruch 1,
**dadurch gekennzeichnet, dass**
das Aufbringen der mindestens einen Gleitlagermaterialschicht (12) durch Ausgießen, Aufschleudern, Bandaufgießen, Aufwalzen, Walzplattieren, Aufdampfen, Aufspritzen, auf galvanischem Wege, oder dergleichen erfolgt.

3. Verfahren nach einem oder mehreren der Ansprüche 1 oder 2,
**dadurch gekennzeichnet, dass**
im Schritt d) mehrere Gleitlagermaterialschichten (12) aufgebracht werden.

4. Verfahren nach einem oder mehreren der Ansprüche 1 bis 3,
**dadurch gekennzeichnet, dass**
die aufgebrachte Gleitlagermaterialschicht (12) nach dem Schritt d) und vor Schritt e) oder f) feinbearbeitet wird.

5. Verfahren nach einem oder mehreren der Ansprüche 1 bis 3,
**dadurch gekennzeichnet, dass**
- nach dem Schritt f) die durch die Schritte b) und f) entstandenen bruchgetrennten Werkstückteile (6.2, 6.4) erneut zusammengepasst und lösbar miteinander verbunden werden, und dann
- die aufgebrachte Gleitlagermaterialschicht (12) feinbearbeitet wird.

6. Verfahren nach einem oder mehreren der Ansprüch 1 bis 3,
**dadurch gekennzeichnet, dass**
nach Schritt d) und vor Schritt f) mindestens eine Gleitlagermaterialschicht-Sollbruchstelle am Innenumfang der Gleitlagermaterialschicht (12) hergestellt wird.

7. Vorrichtung zum Bearbeiten von Werkstücken (6), die mindestens einen ringartigen, mit einer geteilten Bohrung (10) zu versehenden Werkstückabschnitt aufweisen, umfassend
- eine Bruchtrenneinrichtung zum Bruchtrennen des ringartigen Werkstückabschnitts und zum Erzeugen miteinander korrespondierender bruchgetrennter Werkstückteile (6.2, 6.4) mit einer geteilten Bohrung (10),
- eine Gleitlagermaterial-Auftragseinrichtung zum Aufbringen von mindestens einer in sich geschlossenen ringförmigen Gleitlagermaterialschicht (12) auf den Innenumfang der geteilten Bohrung (10) eines bruchgetrennten Werkstücks (6.2, 6.4), und
- eine Gleitlagermaterialschicht-Bruchtrenneinrichtung (2; 8, 8.2, 18, 20, 22, 24) zum Bruchtrennen der in sich geschlossenen ringförmigen Gleitlagermaterialschicht (12) des bruchgetrennten Werkstücks (6.2, 6.4), **dadurch gekennzeichnet, daß** die
Gleitlagermaterialschicht-Bruchtrenneinrichtung (2) mindestens ein axial in die von der beschichteten, geteilten Bohrung (10) gebildete Öffnung einführbares und vollflächig an den Innenumfang (16) der ringförmigen Gleitlagermaterialschicht (12) anlegbares elastisch deformierbares Aufspreiz- und Abstützelement (8) besitzt.

8. Vorrichtung nach Anspruch 7,
**dadurch gekennzeichnet, dass**
das elastisch deformierbare Aufspreiz- und Abstützelement (8) einen elastisch komprimierbaren Körper (8.2) besitzt, der einen vom Innenumfang (16) der ringförmigen Gleitlagermaterialschicht (12) umgrenzten Raum im Wesentlichen vollständig ausfüllt und eine in Axialrichtung der Bohrung (10) gemessene Höhe (H) besitzt, die größer als die axiale Tiefe (T) der Bohrung (10) ist.

9. Vorrichtung nach Anspruch 8,
**dadurch gekennzeichnet, dass**
der elastisch komprimierbare Körper (8.2) eine im Wesentlichen zylindrische oder faßförmige Gestalt besitzt.

10. Vorrichtung nach Anspruch 7 oder 8,
**dadurch gekennzeichnet, dass**
der elastisch komprimierbare Körper (8.2) mindestens einen Elastomerwerkstoff umfasst.

11. Vorrichtung nach Anspruch 8, 9 oder 10,
**dadurch gekennzeichnet, dass**
die Gleitlagermaterialschicht-Bruchtrenneinrichtung (2) eine auf den elastisch komprimierbaren Körper (8.2) einwirkende Druckbeaufschlagungseinrichtung (18; 20, 22) besitzt.

12. Vorrichtung nach Anspruch 7,
**dadurch gekennzeichnet, dass**
das elastisch deformierbare Aufspreiz- und Abstützelement einen elastisch expandierbaren Hohlkörper besitzt, der den vom Innenumfang (16) der ringförmigen Gleitlagermaterialschicht (12) umgrenzten Raum im Wesentlichen vollständig ausfüllt.

13. Vorrichtung nach Anspruch 12,
**dadurch gekennzeichnet, dass**
ein Innenraum des Hohlkörpers mit einer Innendruckbeaufschlagungseinrichtung verbunden ist.

## Claims

1. Method for machining work pieces (6) which have at least one annular work piece section to be provided with a split bore (10), including the following steps:
a) supplying a work piece (6) provided with at least one predetermined break point,
b) applying an expanding force to an inner circumference of the bore (10) for breaking off the at least one annular work piece section and for producing broken-off work piece portions (6.2, 6.4) corresponding to each other and having a split bore (10),
c) fitting together and releasably joining the broken-off work piece portions (6.2, 6.4) formed by step b),
d) applying at least one complete annular layer (12) of plain bearing material to the inner circumference of the split bore (10) of the broken-off work piece portion (6.2, 6.4),
e) undoing the connection between the assembled work piece portions (6.2, 6.4),
f) applying (2, 8, 18, 20, 22, 24) an expanding force to the whole of the inner circumference (16) of the complete annular layer (12) of plain bearing material for breaking off the layer (12) of plain bearing material,
**characterised in that** the annular layer (12) of plain bearing material is supported (8) at its inner circumference (16) resiliently and over the whole surface.

2. Method according to claim 1, **characterised in that** application of the at least one layer (12) of plain bearing material takes place by filling, spinning on, pouring on with a belt, rolling on, roll bonding, vapour deposition, spraying on, electroplating or the like.

3. Method according to one or more of claims 1 or 2, **characterised in that** in step d) several layers (12) of plain bearing material are applied.

4. Method according to one or more of claims 1 to 3, **characterised in that** the applied layer (12) of plain bearing material is fine-machined after step d) and before step e) or f).

5. Method according to one or more of claims 1 to 3, **characterised in that**
- after step f) the broken-off work piece portions (6.2, 6.4) formed by steps b) and f) are again fitted together and releasably joined to each other, and then
- the applied layer (12) of plain bearing material is fine-machined.

6. Method according to one or more of claims 1 to 3, **characterised in that** after step d) and before step f) at least one predetermined break point in the layer of plain bearing material is made at the inner circumference of the layer (12) of plain bearing material.

7. Apparatus for machining work pieces (6) which have at least one annular work piece section to be provided with a split bore (10), including:
- a break-off device for breaking off the annular work piece section and for producing broken-off work piece portions (6.2, 6.4) corresponding to each other and having a split bore (10),
- a plain bearing material applicator for applying at least one complete annular layer (12) of plain bearing material to the inner circumference of the split bore (10) of a broken-off work piece portion (6.2, 6.4), and
- a plain bearing material layer break-off device (2; 8, 8.2, 18, 20, 22, 24) for breaking off the complete annular layer (12) of plain bearing material of the broken-off work piece (6.2, 6.4),
**characterised in that** the plain bearing material layer break-off device (2) has at least one elastically deformable expanding and supporting element (8) which can be introduced axially into the opening formed by the coated, split bore (10) and which can be applied over the whole surface to the inner circumference (16) of the annular layer (12) of plain bearing material.

8. Apparatus according to claim 7, **characterised in that** the elastically deformable expanding and supporting element (8) has an elastically compressible body (8.2) which substantially completely fills out a space encompassed by the inner circumference (16) of the annular layer (12) of plain bearing material and which has a height (H), measured in the axial direction of the bore (10), which is greater than the axial depth (T) of the bore (10).

9. Apparatus according to claim 8, **characterised in that** the elastically compressible body (8.2) has a substantially cylindrical or barrel shape.

10. Apparatus according to claim 7 or 8, **characterised in that** the elastically compressible body (8.2) includes at least one elastomeric material.

11. Apparatus according to claim 8, 9 or 10, **characterised in that** the plain bearing material layer break-off device (2) has a pressure-applying device (18; 20, 22) acting on the elastically compressible body (8.2).

12. Apparatus according to claim 7, **characterised in that** the elastically deformable expanding and supporting element has an elastically expandable hollow body which substantially completely fills out the space encompassed by the inner circumference (16) of the annular layer (12) of plain bearing material.

13. Apparatus according to claim 12, **characterised in that** an interior space of the hollow body is connected to an internal pressure-applying device.

## Revendications

1. Procédé d'usinage de pièces d'oeuvre (6), présentant au moins un tronçon de pièce d'oeuvre annulaire à munir d'un perçage (10) divisé, comprenant les étapes suivantes :
a) fourniture d'une pièce d'oeuvre (6) munie d'au moins un point destiné à la rupture,
b) application d'une force d'ouverture par écartement à une périphérie intérieure du perçage (10), afin de séparer par fracturation le au moins un tronçon de pièce d'oeuvre annulaire et de générer des parties de pièces d'oeuvre (6.2, 6.4) séparées par fracturation, se correspondant les unes les autres, avec un perçage (10) divisé,
c) assemblage de façon ajustée et liaison désolidarisable des parties de pièces d'oeuvre (6.2, 6.4) séparées par fracturation, produite par l'étape b),
d) application d'au moins une couche de matériau de palier à glissement (12), en forme d'anneau, fermée en soi, sur la périphérie intérieure du perçage (10) divisé de la pièce d'oeuvre (6.2, 6.4) séparée par fracturation,
e) coupure de la liaison entre les parties de pièces d'oeuvre (6.2, 6.4) assemblées de façon ajustée,
f) application (2, 8, 18, 20, 22, 24) d'une force d'ouverture par écartement à l'ensemble de la périphérie intérieure (16) de la couche de matériau de palier à glissement (12) annulaire, fermée en soi, pour obtenir la séparation par fracturation de la couche de matériau à palier à glissement (12), **caractérisé en ce que** la couche de matériau de palier à glissement (12) annulaire est soutenue (8), élastiquement et sur toute la surface, sur sa périphérie intérieure (16).

2. Procédé selon la revendication 1,
**caractérisé en ce que**
l'application de la au moins une couche de matériau de palier à glissement (12) s'effectue par coulée par gravité, centrifugation, coulée sur bande, application par laminage, plaquage par laminage, application par vaporisation, application par pulvérisation par voie galvanique ou analogues.

3. Procédé selon l'une ou plusieurs des revendications 1 ou 2,
**caractérisé en ce que**
plusieurs couches de matériau de palier à glissement (12) sont appliquées à l'étape d).

4. Procédé selon l'une ou plusieurs des revendications 1 à 3,
**caractérisé en ce que**
la couche de matériau de palier à glissement (12) appliquée est soumise à usinage plus fin, après l'étape d) et avant l'étape e) ou f).

5. Procédé selon l'une ou plusieurs des revendications 1 à 3,
**caractérisé en ce que**,
- après l'étape f), les parties de pièces d'oeuvre (6.2, 6.4) séparées par fracturation, produites par les étapes b) et f), sont de nouveau assemblées de façon ajustée et reliées ensemble de façon désolidarisable, puis
- la couche de matériau de palier à glissement (12) appliquée est soumise à un usinage fin.

6. Procédé selon l'une ou plusieurs des revendications 1 à 3,
**caractérisé en ce que**,
après l'étape d) et avant l'étape f), au moins un point destiné à la rupture de la couche de matériau de palier à glissement est produit sur la périphérie intérieure de la couche de matériau de palier à glissement (12).

7. Dispositif pour l'usinage de pièces d'oeuvre (6), présentant au moins un tronçon de pièces d'oeuvre annulaire à munir d'un perçage (10) divisé, comprenant :
- un dispositif de séparation par fracturation, pour séparer par fracturation le tronçon de pièces d'oeuvre annulaire et pour produire des parties de pièces d'oeuvre (6.2, 6.4) séparées par fracturation, se correspondant entre elles, avec un perçage (10) divisé.
- un dispositif d'application de matériau de palier à glissement, pour appliquer au moins une couche de matériau de palier à glissement (12) annulaire, fermée en soi, sur la périphérie intérieure du perçage (10) divisé d'une pièce d'oeuvre (6.2, 6.4) séparée par fracturation, et
- un dispositif de séparation par fracturation (2; 8, 8.2, 18, 20, 22, 24) de couches de matériau de palier à glissement (12), pour séparer par fracturation la couche de matériau de palier à glissement (12) annulaire, fermée en soi, de la pièce d'oeuvre (6.2, 6.4) séparée par fracturation, **caractérisé en ce que**
le dispositif de séparation par fracturation de couche de matériau de palier à glissement (2) comprend au moins un élément d'ouverture par écartement et de soutien (8) déformable élastiquement, pouvant être introduit axialement dans l'ouverture formée par le perçage (10) divisé, muni d'un revêtement, et pouvant être appliqué sur toute la surface sur la périphérie intérieure (16) de la couche de matériau de palier à glissement (12) annulaire.

8. Dispositif selon la revendication 7,
**caractérisé en ce que**
l'élément d'ouverture par écartement et d'appui (8) déformable élastiquement comprend un corps (8.2) comprimable élastiquement, remplissant pratiquement complètement un espace, délimité en périphérie par une périphérie intérieure (16) de la couche de matériau de palier à glissement (12) annulaire, et ayant une hauteur (H), mesurée dans la direction axiale du perçage (10), qui est supérieure à la profondeur axiale (T) du perçage (10).

9. Dispositif selon la revendication 8,
**caractérisé en ce que**
le corps (8.2) comprimable élastiquement présente une forme sensiblement cylindrique ou en tonneau.

10. Dispositif selon la revendication 7 ou 8,
**caractérisé en ce que**
le corps (8.2), pouvant être comprimé élastiquement, comprend au moins un matériau élastomère.

11. Dispositif selon la revendication 8, 9 ou 10
**caractérisé en ce que**
le dispositif de séparation par fracturation de couche de matériaux de palier à glissement (2) comprend un dispositif de sollicitation en pression (18; 20, 22), agissant sur le corps (8.2) déformable élastiquement.

12. Dispositif selon la revendication 7,
**caractérisé en ce que**
l'élément d'ouverture par écartement et de soutien, déformable élastiquement, présente un corps creux extensible élastiquement, qui remplit pratiquement complètement l'espace délimité en périphérie par la périphérie intérieure (16) de la couche de matériau de palier à glissement (12) annulaire.

13. Dispositif selon la revendication 12,
**caractérisé en ce qu'**
un espace intérieur du corps creux est muni d'un dispositif de sollicitation par une pression intérieure.
